# EUROPÄISCHE PATENTANMELDUNG

(11) **EP 3 260 744 A1**
(43) Veröffentlichungstag der Anmeldung: **27.12.2017**
(21) Anmeldenummer: 16001400.7
(22) Anmeldetag: 22.06.2016
(51) Int. Cl.: F16K 7/17, F01L 9/02, F01L 1/46, F01L 25/02, F01L 25/08, F01B 29/00

(54) **PERMANENTMAGNETISCHE STEUERUNG FÜR DRUCKLUFTMOTOREN**

(71) Anmelder: Menrath, Eduard, 75031 Eppingen (DE)
(72) Erfinder: Menrath, Eduard, 75031 Eppingen (DE)

(57) **Zusammenfassung**

Druckluftmotoren werden in Funktion und Drehzahl mit einer Kombination von Ventilen gesteuert, von denen eines den Primär-Luftstrom zum Arbeitszylinder schaltet und ein zweites einen Entlüftungskanal permanentmagnetisch geregelt und durch den pulsierenden Gegendruck im Zylinder synchronisiert, öffnet und schließt, um damit das erste Ventil über seinen Innendruck zu betätigen.

## Beschreibung

### BEREICH DER ERFINDUNG

Die Erfindung bezieht sich auf die Steuerung von Druckluftmotoren mit einem zweiseitig wirkenden Ventil und einem manuell geführten Permanentmagnet ohne Einsatz zusätzlicher Komponenten und Steuerorgane.

### HINTERGRUND DER ERFINDUNG / ZU LOSENDES PROBLEM.

Mit Druckluft betriebene Antriebe haben den Vorteil einfach und robust zu sein und gewährleisten, soweit ein Druckspeicher (z.B. eine Flasche mit Druckluft) zur Verfügung steht, hohe Betriebssicherheit.
Für viele Anwendungen, insbesondere dort, wo auch Druckluft-Werkzeuge Anwendung finden, stehen auch zentrale Kompressoren und Druckspeicher, sowie -Anschlüsse zur Verfügung, mit denen hohe Leistungen übertragbar sind.

Speziell für Druckluftspeicher zur Zwischenspeicherung von elektrischer Energie und deren Rückgewinnung mit Druckluft-Motoren ergibt sich dabei das Problem des Energieverlustes in allen Phasen der Anwendung.
So sind sowohl auf der Seite der Verdichter, wie auch der Motoren turbinenartige Systeme üblich, die zwar gute Wirkungsgrade aufweisen; dies allerdings nur in engen Drehzahlbereichen und bei vorzugsweise hohen Drücken.
Andererseits stehen zur Speicherung größerer Energiemengen, wie z.B. zur Zwischenspeicherung des Ertrags von Windkraftfeldern, Salzkavernen zur Verfügung, deren Sicherheitstechnische Anforderungen für hohe Drücke aber erheblichen baulichen- und Überwachungsaufwand erfordern.
Zudem steigert hoher Druck im System die thermischen Verluste bei der Verdichtung, weil deren Hitzeentwicklung kaum dauerhaft zwischengespeichert werden kann. Dagegen entsteht bei der Expansion zur Nutzung der Druckluft normalerweise Eis, das Ventile verstopft und Turbinen blockiert, wenn die komprimierte Luft nicht vorher aufwändig getrocknet wurde. Dies ist aber noch teurer, als soweit zuzuheizen, dass die Vereisung vermieden wird.
Mit der Zuheizung sinkt aber der Wirkungsgrad der Systeme so weit, dass bislang nur sehr wenige dieser Systeme zum Einsatz kamen, obwohl sie zum Ausgleich von Spitzenlast und zeitweise sehr hohem Eintrag eigentlich optimale Voraussetzungen bieten.

Eine nahe liegende Lösung dafür ist, große Speichervolumen mit nur mäßigem Druck zu nutzen, um sowohl die Sicherheitsvorkehrungen, wie auch die Wandlungsverluste in Grenzen zu halten.
Dem widerspricht aber bisher die nötige Auslegung der Verdichter- und Rückwandlungssysteme mit turbinenartiger Konstruktion auf hohe Drücke.

Eine nahe liegende Lösung dafür ist die Anwendung von Kolbenmaschinen, insbesondere für Druckluftmotoren zum Betrieb der Stromgeneratoren. Diese arbeiten zwar in einem relativ breiten Feld von Primärdrücken. Das Problem ist hier aber, dass die Generatoren um so höheren Wirkungsgrad haben, je konstanter die Drehzahl der Antriebe ist.
Dazu ist es erforderlich, Druckluft-Motoren über die Einstellung des Luftzustroms mit Reduzierventilen auf geringe Druckniveaus abzuregeln; allerdings sinkt damit wiederum der Wirkungsgrad des Gesamtsystems.

Auch in der Anwendung von Kleinanlagen mit Druckluftflaschen ist dies ein Problem, weil mit zunehmender Ausnutzung des Speichervolumens der Primärdruck sinkt.
Dies behindert bislang den Einsatz solcher Systeme, die zudem eine komplexe elektronische Steuerung verlangen, die im Gegensatz zur ursprünglichen Einfachheit und Robustheit von Druckluftmotoren steht.

### AUFGABENSTELLUNG

Es ist daher Aufgabe vorliegender Erfindung, ein Steuersystem zu schaffen, mit dem Druckluftmotoren ohne elektrische oder elektronische Regelelemente in einem wechselnden Bereich von Primärdrücken sicher und verlustarm regelbar sind, ohne dazu einen Komplex von Reduzierventilen und Steuereinheiten zur Anpassung des Arbeitsdruckes zu benötigen.

### LÖSUNG

Die vorliegende Aufgabe wird dadurch gelöst, dass ein zweiseitig wirkendes Membranventilsystem magnetisch gesteuert wird.

Dies erfolgt dadurch, dass ein Gummi-Ventilkörper mit einer primären Druckkammer die Druckluft-Zuleitung zum Arbeitszylinder des Motors verschließt.
Diese Druckkammer wird durch eine Zuluftöffnung im Boden des Gummi-Veltilkörpers beschickt.
Jener enthält jedoch in der Mitte auch einen Entlüftungskanal, der von einem weiteren Ventil verschlossen ist, dessen Dichtung unter einer magnetisierbaren Metallscheibe angebracht ist. Diese Metallscheibe wird mit einer Feder im Ventilkörper mittig geführt, das Ventil schließt aber aufgrund des Innendrucks im Gummi-Ventilkörper.
Dieser Innendruck wirkt aber nur so lange zum Verschluss der Druckluftöffnung zum Zylinder, wie er nicht durch den Entlüftungskanal abfliessen kann.
Wird die Metallscheibe angehoben, öffnet sich das Ventil des Entlüftungskanals, der Druck entweicht aus dem Gummikörper und dieser gibt den Druckluft-Einlass zum Zylinder wieder frei. Um die Metallscheibe anzuheben, kann ein Magnet über ihr betätigt werden. Das Ganze ist aber so dimensioniert, dass sich dieser Ventilmechanismus erst dann öffnet, wenn der Druck im Entlüftungskanal entsprechend hoch ist - und dies ist dann der Fall, wenn im Arbeitszylinder erhöhter Druck vorliegt, der über den Entlüftungskanal zusätzlich an der Dichtung anliegt.
Dieser Druck wird jeweils erreicht, wenn der Arbeitskolben im zweiten Takt kurz vor Erreichen des oberen Totpunktes steht. In einem daraus resultierenden Regelkreis ergibt sich ein pulsierenden Druckluftstrom in den Arbeitszylinder, der sich auf Grund des wechselnden Gegendrucks in ihm selbsttätig mit der Kolbenbewegung des Gerätes synchronisiert:
Durch Dosierung der Magnetwirkung auf die Metallscheibe lässt sich der Motor steuern, weil sie bestimmt, ob oder in welchem Bereich des Zyklus das Ventil bei gegebenem Gegendruck durchschaltet.

Die Magnetwirkung kann durch einen geregelten Elektromagnet über dem Gummi-Ventilkörper erfolgen, oder durch einen mechanisch oder mechatronisch angenäherten Permanentmagneten, oder bei Kurzzeitbetrieb durch die händische Annäherung bzw. Führung eines solchen, wie es sich im praktischen Anwendung bewährt hat.

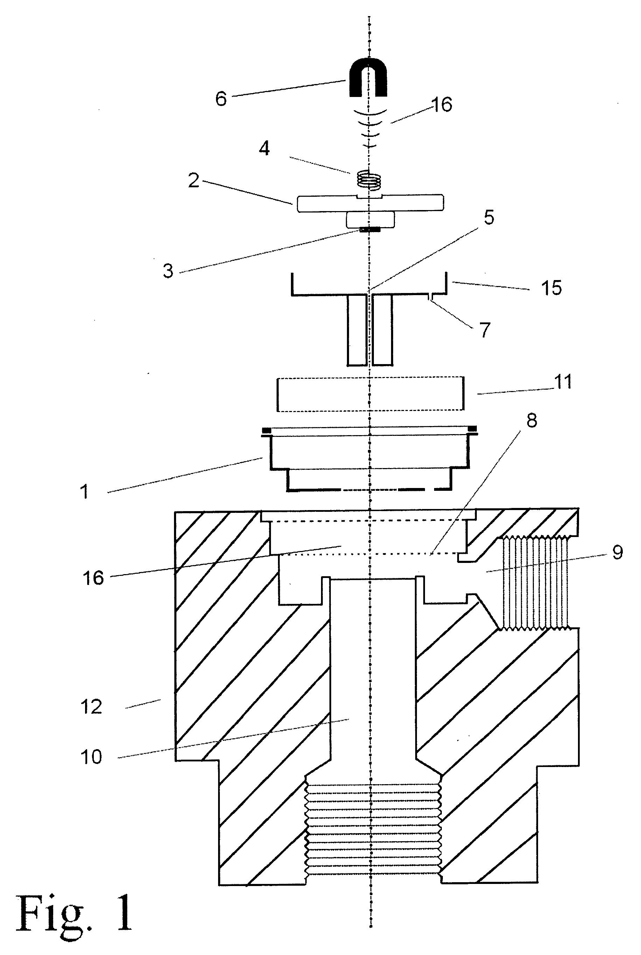

### BESCHREIBUNG ANHAND DER EXPLOSIONS-SCHNITTZEICHNUNG FIG. 1:

In dem Gummi Ventilkörper (1) wirkt eine Metallscheibe (2) mit Dichtung (3) und Führungsfeder (4) als Verschluss einer Entlüftungskanals (5).
Diese Metallscheibe (2) besteht aus magnetisierbarem Werkstoff, sie ist daher durch Magnetkraft anhebbar und verschiebbar. Bei Ansatz eines Magnetfeldes, hier durch einen Permanentmagneten (6), öffnet sie einen der einwirkenden Magnetkraft (16) entsprechenden Durchlass zum Entlüftungskanal (5)
Dabei entweicht der durch die Zuluftöffnung (7) aufgebachte Innendruck aus der Kammer des Gummi-Ventilkörpers (1) und das Ventil öffnet einen seitlichen Durchlass (8), so dass die im Einlass (9) anstehende Druckluft durch den Ventilkanal (10) zum Arbeitszylinder (nicht gezeigt) geführt werden kann.

Durch Stärke und Richtung des die Metallscheibe anhebenden Magnetfelds (16) kann die Dauer des Zustroms der Druckluft in den Zylinder im pulsierende Gegendruck im Entlüftungskanal (5) gesteuert werden. Damit ist die Drehzahl des Motors, weit gehend unabhängig vom Primär- oder Kesseldruck des Systems, regelbar.

## Patentansprüche

1. Steuerung für Druckluftmotoren, **dadurch gekennzeichnet, dass** die Öffnung eines Steuerventils (1 + 11 +15) für den Druckluft-Einlass durch ein zweites, magnetisch gesteuertes Ventil (2 bis 4) geregelt und durch den pulsierenden Gegendruck der Luftsäule im Zylinder durch einen Entlüftiungskanal (5) des Steuerventils (1) synchronisiert wird.

2. Steuerung für Druckluftmotoren nach Anspruch 1, **dadurch gekennzeichnet, dass** das Steuerventil aus einem abgedeckten, wannenförmigen Gummi-Ventilelement (1) mit einem Einsatz (15) besteht, das, durch einen Ring (11) gestützt, in radialen Ausfräsungen (18) eines Ventilkörpers (12) einliegt.

3. Steuerung für Druckluftmotoren nach Anspruch 2, **dadurch gekennzeichnet, dass** das Gummi-Ventilelement (1) eine Druck-Zuführungsöffnung (7) und einen Entlüftungskanal (5) aufweist.

4. Steuerung für Druckluftmotoren nach Anspruch 3, **dadurch gekennzeichnet, dass** eine magnetisierbare Platte (2) mit einer Dichtung (3) in einer Innenwanne (15) im Boden des Gummi-Ventilelements (1) den Entlüftungskanal verschließen kann.

5. Steuerung für Druckluftmotoren nach einem oder mehreren der vorstehenden Ansprüche, **dadurch gekennzeichnet, dass** das Gummi-Ventilelement bei hohem Innendruck die im Einlass (9) anstehende Druckluft zum Ventilkanal (1) und damit zum Eintritt in den Arbeitszylinder hin blockiert.

6. Steuerung für Druckluftmotoren nach Anspruch 4, **dadurch gekennzeichnet, dass** die magnetisierbare Platte (2) durch Einwirkung eines Magnetfeldes (16) von oben angezogen werden kann. um zusammen mit dem Gegendruck aus dem Arbeitszylinder im Entlüftungskanal die Druckluft-Zufuhr zum Arbeitszylinder rhythmisch zu öffnen.

7. Steuerung für Druckluftmotoren nach Anspruch 6, **dadurch gekennzeichnet, dass** das anhebende Magnetfeld durch einen manuell oder mechatronisch angenäherten Permanentmagnet bewirkt wird,

8. Steuerung für Druckluftmotoren nach Anspruch 6, **dadurch gekennzeichnet, dass** das anhebende Magnetfeld durch einen geregelten Elektromagnet bewirkt wird.
